# EUROPEAN PATENT APPLICATION

(11) **EP 3 797 849 A1**
(43) Date of publication of application: **31.03.2021**
(21) Application number: 20157430.8
(22) Date of filing: 14.02.2020
(51) Int. Cl.: B01D 39/16

(54) **ANTIMICROBIAL FACE MASK**

(30) Priority: 27.09.2019 CN 201921637381 U
(71) Applicant: Sanhe Anbatec Biotechnology Co., Ltd., Langfang, Hebei 065201 (CN)
(72) Inventor: LIN, Yuping, Sanhe Shi Langfang, Hebei 065201 (CN); SUN, Zhuoran, Beijing, 100055 (CN); CHENG, Bin, Beijing, 100101 (CN); LIN, Xue, 81539 München (DE); LIN, Yujun, Beijing (CN)
(74) Representative: Hofstetter, Schurack & Partner

(57) **Abstract**

The invention is directed to an antimicrobial face mask based upon the antimicrobial mechanism of molybdenum oxide and/or tungsten oxide. The antimicrobial face mask comprises: a face mask body, which includes the outer layer, filter layer and skin-contact layer laminated subsequently from the outside to the inside, wherein the outside is the side that is exposed to outer environment, the inside is the side that contacts facial skin. The outer layer of the antimicrobial face mask based upon the antimicrobial mechanism of molybdenum oxide and/or tungsten oxide filters dust and prevents fluid splash; the filter layer can eliminate bacteria that go through the outer layer and contact the filter layer, and can filter dust that contact the filter layer as well; the skin-contact layer is soft, skin-friendly and suitable for wearing. Hence, the antimicrobial face mask based upon the antimicrobial mechanism of molybdenum oxide and/or tungsten oxide possesses shielding, filtering and antimicrobial functions, and assured comfort.

## Description

The invention relates to regular sanitary product system and is also applicable to medical industry. It specifically refers to an antimicrobial face mask based upon the antimicrobial mechanism of molybdenum oxide and/or tungsten oxide.

As one type of sanitary product, a face mask generally refers to a facial accessory made from fabrics, papers or other materials, covering mouth and nose area to filter noxious fumes, odors, or fluid splash. Wearing face mask is helpful as in-air filtering, preventing respiratory infectious diseases, and filtering dust pollution.

In recent years, many regions are suffering from smog pollution, which contains enormous amount of hazardous particles, which therefore causes serious damage on respiratory system and cardiovascular system, and which also significantly raises the incidence of asthma, bronchitis, and myocardial infarction which severely affect our life. Moreover, since bacteria, such as diplococcus, single coccus, EMES, tetrads, and staphylococcus, swarm everywhere in the air and can induce many diseases, such as flus, TB, measles, mumps, pertussis, and diphtheria, due to their rapid reproductivity, strong viability, and wide ranges of infectivity. Therefore, an effective method to filter and eliminate airborne bacteria are critically demanded.

So far, protective face mask has become one of the most important method of personal sanitary protection as in filtering particles, preventing bacteria transmission and protecting the susceptibles. Currently, the filtration, isolation, electrostatic attraction and absorption of bacteria and particles are achieved through the small pore space and high porosity of raw materials of face masks. However, highly effective filtration of particles and elimination of bacteria are yet to realize due to disadvantages of mask making materials.

The present invention presents an antimicrobial face mask based upon antimicrobial mechanism of molybdenum oxide and/or tungsten oxide, which possesses performance advantages such as antimicrobial activity, deodorization, filtration, toxic free and irritation free.

In order to achieve the goal above-mentioned, in the light of one aspect of the invention, an antimicrobial face mask based upon antimicrobial mechanism of molybdenum oxide and/or tungsten oxide is presented.

An antimicrobial face mask based upon the antimicrobial mechanism of molybdenum oxide and/or tungsten oxide described above comprising: a face mask body including an outer layer, a filter layer and a skin-contact layer laminated subsequently from the outside to the inside, wherein the outside is the side that is exposed to outer environment and the inside is the side that contacts facial skin.

In one embodiment, wherein the outer layer has antimicrobial surfaces on both two sides, the antimicrobial surface on the inside contacts the filter layer.

In one embodiment the outer layer is the antimicrobial layer.

In one embodiment the antimicrobial surface is dipped with molybdenum oxide and/or tungsten oxide.

In one embodiment the outer layer is dipped with molybdenum oxide and/or tungsten oxide.

In one embodiment the antimicrobial layer is located between the outer layer and the filter layer, wherein the layers from the outside to the inside are, in turn, outer layer, antimicrobial layer, filter layer and skin-contact layer.

In one embodiment the antimicrobial layer is formed from hydrophilic spunbond non-woven fabric. Moreover, the antimicrobial layer is dipped with molybdenum oxide and/or tungsten oxide.

In one embodiment the filter layer is formed from meltblown non-woven fabric.

In one embodiment the outer layer is formed from spunbond or spunlace non-woven fabric.

In one embodiment the skin-contact layer is formed from spunbond non-woven fabric, hydrophilic spunbond non-woven fabric, spunlace non-woven fabric or extra soft spunbond non-woven fabric.

In one embodiment an adjustable nose clip is set on the face mask body.

Further, a four-layer structured antimicrobial face mask based upon antimicrobial mechanism of molybdenum oxide and/or tungsten oxide is presented, wherein the outer layer filters dust and prevents fluid splash. The filter layer can eliminate bacteria that go through the outer layer and contact the filter layer, and can filter dust that contact the filter layer as well. The skin-contact layer is soft, skin-friendly and suitable for wearing. Hence, the antimicrobial face mask based upon the antimicrobial mechanism of molybdenum oxide and/or tungsten oxide possesses shielding, filtering and antimicrobial functions, and assured comfort.

Furthermore, a three-layer structured antimicrobial face mask based upon antimicrobial mechanism of molybdenum oxide and/or tungsten oxide is presented, wherein the outer layer, dipped with antimicrobial agents, filters dust, and prevents fluid splash, and eliminates bacteria. Hence, the three-layer antimicrobial face mask based upon antimicrobial mechanism of molybdenum oxide and/or tungsten oxide with its simpler structure, possesses shielding, filtering and antimicrobial functions, and assured comfort.

### Brief Description of the Drawings

The following figures are provided to serve a better understanding of the invention. However, they do not form improper limitations to the invention.
FIG. 1 is a schematic illustration of an antimicrobial face mask based upon antimicrobial mechanism of molybdenum oxide and/or tungsten oxide according an embodiment of the present invention;
FIG. 2 is a sectional view of a face mask body of a four-layer structured antimicrobial face mask according to the present invention;
FIG. 3 is a sectional view of a face mask body of a three-layer structured antimicrobial face mask according to the present invention;
FIG. 4 is a sectional view of a face mask body of a three-layer structured antimicrobial face mask according to the present invention;
FIG. 5 is a schematic illustration of the face mask body of the three-layer structured antimicrobial face mask according to the present invention; and
FIG. 6 is a schematic illustration of the face mask body of the four-layer structured antimicrobial face mask according to the present invention.

### REFERENCE NUMBERS

1-Outer Layer, 2-Antimicrobial Layer, 3-Filter Layer, 4-Skin-Contact Layer, 5-Antimicrobial Surface, 6-Nose Clip, 7-Face Mask Body, 8-Elastic Ear Loop.

### Detailed Description of the Embodiments

The following description, demonstrations and figures, including numerous specific details are set forth in order to provide a thorough understanding of the invention. They should only be considered as exemplary. Hence, a person with ordinary skill in the art should note that modifications can be made to this description, provided that they do not conflict with the scope or purpose of the invention. Similarly, in order to be clear and concise, functional and structural information known to the general public is omitted.

The invention refers to an antimicrobial face mask based upon the antimicrobial mechanism of molybdenum oxide and/or tungsten oxide, which comprises a face mask body 7, including an outer layer 1, a filter layer 3 and a skin-contact layer 4 laminated subsequently from the outside to the inside. Outer layer 1, filter layer 3 and skin-contact layer 4 are ultrasonically welded together on four sides, forming face mask body 7. The outer layer 1 constitutes an antimicrobial layer 2.

One way to produce the antimicrobial face mask is to dip a spunbond or spunlace non-woven fabric with the antimicrobial agent for 10 minutes to 5 hours, then oven dry the spunbond or spunlace non-woven fabric at 60°C, and go through the disinfection process, thus receiving outer layer 1 with antimicrobial function.

The antimicrobial agent can be the follow: ASK Antimicrobial Fabric Agent commercially available from Sanhe Anbatec Bio-Technology Co., Ltd. The grammage of the outer layer 1 is 20-35g/m², with an optimum at 28g/m².

The outer layer 1 is formed from spunbond or spunlace non-woven fabric. Spunlace non-woven fabric is weaved from spunbond fiber, which is obtained via spraying high pressure micro water flow onto single-layer or multi-layer fiber nets guaranteeing fiber strength. The raw material of fiber can be obtained from a wide range of sources, such as polyester fiber, nylon, polypropylene fiber, viscose fiber, chitin fiber, superfine fiber, tencel, silk, bamboo fiber, wood pulp fiber and algal fiber. Spunlace non-woven fabric is soft, puffy, highly hydroscopic and oil-absorbing, whereas spunbond non-woven fabric holds better temperature capability (polypropylene fiber withstands as high as 150°C, polyester fiber withstands 260°C temperature.), aging resistance, corrosion resistance, UV proof, high elongation, high stability and breathability, sound proof, moth proof and zero toxicity.

Skin-contact layer 4 is formed from spunbond spunlace non-woven fabric, hydrophilic spunbond non-woven fabric, spunlace non-woven fabric or extra soft spunbond non-woven fabric, wherein the characteristics of spunbond and spunlace non-woven fabric are as stated above.

The raw materials of hydrophilic spunbond non-woven fabric are mainly polyester fiber and polypropylene fiber. Hydrophilic spunbond non-woven fabric has good performance at water absorbency, thermostability, aging resistance, UV resistance, elongation ability, stability, breathability, corrosion resistance, soundproof, moth proof and zero toxicity.

The extra soft spunbond non-woven fabric can be polypropylene spunbond non-woven fabric, which has excellent softness, hydrophilicity, fiber fineness, surface evenness, and thickness, which are specifically suitable for manufacturing sanitary products, such as baby/adult diapers, face masks, sanitary caps, isolation gowns and shoe covers.

The grammage of the skin-contact layer 4 is 20-33g/m², with an optimum at 25g/m².

The filter layer 3 is made of meltblown non-woven fabric, which has porous microscope structure, wherein the micro pores are very small in size. Therefore meltblown non-woven fabric has outstanding filtering efficiency. Moreover, electret treatment can add electrostatic properties, which further improve filtering performance. These properties make meltblown non-woven fabric widely applied in manufacturing surgical masks, A/C filter, and all types of filter materials.

The antimicrobial face mask based upon antimicrobial mechanism of molybdenum oxide and/or tungsten oxide contains at least one filter layer 3. The number of filter layer 3 can be one, two, three, four, five, or more as per demand.

The grammage of the filter layer 3 is 20-33g/m², with an optimum at 25g/m².

An adjustable nose clip 6 is set on face mask body 7. Adjusting nose clip 6 ensures that the antimicrobial face mask based upon antimicrobial mechanism of molybdenum oxide fit closely to user's face. Elastic ear loops 8 are set on both ends of face mask body 7. Putting on face mask through pulling ear loops back and around both ears. Ear loops 8 are elastic, therefore ensures face mask being suitable for different face shapes.

Molybdenum oxide and/or tungsten oxide particles are spread evenly onto outer layer 1 of antimicrobial face mask based upon antimicrobial mechanism of molybdenum oxide and/or tungsten oxide described in the invention. There forms a three dimensional weak acid microenvironment once molybdenum oxide and/or tungsten oxide particles come into contact with water particles in the air, and create a layer of hydrogen ion through ionization reaction. The weak acid microenvironment in outer layer 1 can effectively eliminate bacteria that contact the layer. Then filter layer 3 filters remaining dust and that pass through outer layer 1, thus making air clean and sanitized when it reaches skin-contact layer 4. Antimicrobial outer layer 1 not only isolates larger dust particles, but also kills airborne bacteria carried by them. Setting antimicrobial outer layer 1 outside filter layer 3 puts the antimicrobial process ahead of filtration, whereas setting antimicrobial outer layer 1 inside filter layer 3 weakens antimicrobial performance, since in real-life scenarios, most bacteria are carried by dust particles, therefore if dust is filtered through filter layer 3 before antimicrobial outer layer 1, bacteria will stuck in filter layer 3 with dust particles. Without being effectively eliminated, bacteria on filter layer 3 continue to reproduce, and eventually affect user's health.

In the present description, the outside is the side that is exposed to outer environment; the inside is the side that contacts facial skin. The outer layer 1 lies on the outside that is exposed to outer environment; whereas skin-contact layer 4 lies on the inside that contacts user's facial skin. The outer layer 1 filters dust and prevents fluid splash; the filter layer 3 can eliminate bacteria and can filter dust and pollen that contact the filter layer 3; the skin-contact layer 4 is soft, skin-friendly and suitable for wearing. Hence, the antimicrobial face mask based upon the antimicrobial mechanism of molybdenum oxide and/or tungsten oxide possesses shielding, filtering and antimicrobial functions, and assured comfort.

The terms "inside", "inner" and "internal" all refers to the side that contacts facial skin of the user; "outside", "outer" and "external" all refers to the side that is exposed to outer environment.

An embodiment of the present invention refers to an antimicrobial face mask based upon the antimicrobial mechanism of molybdenum oxide and/or tungsten oxide. The antimicrobial face mask based upon the antimicrobial mechanism of molybdenum oxide and/or tungsten oxide, comprising: the face mask body 7, including the outer layer 1 that has antimicrobial surfaces 5, the filter layer 3 and the skin-contact layer 4 laminated subsequently from the outside to the inside. The outer layer 1 has antimicrobial surfaces 5 on both two sides; the antimicrobial surface 5 on the inside contacts the filter layer 3; the antimicrobial surface 5 on the outside contacts the outer environment and can eliminate airborne bacteria that go through the face mask. The antimicrobial surface 5 contains molybdenum oxide and/or tungsten oxide, both of which have antimicrobial property. There forms a three dimensional weak acid micro-environment once molybdenum oxide and/or tungsten oxide particles in antimicrobial surfaces 5 come into contact with water particles in the air, and create a layer of hydrogen ion through ionization reaction. The weak acid microenvironment in outer layer 1 can effectively eliminate bacteria that contact the outer layer 1 and that go through the layer 1. Then below-mentioned filter layer 3 filters sterilized dust particles that pass through outer layer 1. The outer layer 1 is formed from spunbond or spunlace non-woven fabric. The grammage of the outer layer 1 is 20-35g/m², with an optimum at 28g/m².

The outer layer 1 with antimicrobial surfaces 5 can be processed through dipping both sides of the spunbond or spunlace non-woven fabric successively into the antimicrobial agent for 5 to 40 minutes, then oven dry the immersed spunbond or spunlace non-woven fabric at 60°C and go through the disinfection process, thus receiving outer layer 1 with antimicrobial surfaces 5.

The antimicrobial agent can be the ASK Antimicrobial Fabric Agent commercially available from Sanhe Anbatec Bio-Technology Co., Ltd.

In the embodiments, the filter layer 3 and skin-contact layer 4 has the same structure as the filter layer 3 and skin-contact layer 4 of the antimicrobial face mask based upon the antimicrobial mechanism of molybdenum oxide stated above and will not be described again in the embodiments.
an embodiment of the present invention relates to an antimicrobial face mask based upon antimicrobial mechanism of molybdenum oxide, comprising: face mask body 7 including the outer layer 1, antimicrobial layer 2, filter layer 3 and skin-contact layer 4 laminated subsequently from the outside to the inside. The antimicrobial layer 2 on the outside contacts outer layer 1, whereas antimicrobial layer 2 on the inside contacts filter layer 3. The outer layer 1 outer layer is formed from spunbond or spunlace non-woven fabric. The grammage of the outer layer 1 is 20-35g/m², with an optimum at 28g/m².

The skin-contact layer 4 is formed from spunbond non-woven fabric, hydrophilic spunbond non-woven fabric, spunlace non-woven fabric or extra soft spunbond non-woven fabric. The grammage of the skin-contact layer 4 is 20-33g/m², with an optimum at 25g/m².

In one specific embodiment, the antimicrobial face mask based upon antimicrobial mechanism of molybdenum oxide and/or tungsten oxide contains at least one filter layer 3. The number of filter layer 3 can be one, two, three, four, five, or more as per demand.

In one specific embodiment, the antimicrobial face mask based upon antimicrobial mechanism of molybdenum oxide and/or tungsten oxide contains at least one antimicrobial layer 2. The number of antimicrobial layer 2 can be one, two, three, four, five, or more as per demand.

Furthermore, the number of filter layer 3 and antimicrobial layer 2 can be either the same or different. For example, the number of antimicrobial layer 2 is two, and the number of filter layer 3 is three.

The antimicrobial layer 2 can be formed from hydrophilic spunbond non-woven fabric. The raw material of hydrophilic spunbond non-woven fabric is mainly polyester fiber and polypropylene fiber. Hydrophilic spunbond non-woven fabric has good performance at water absorbency, thermostability, aging resistance, UV resistance, elongation ability, stability, breathability, corrosion resistance, soundproof, moth proof and zero toxicity. Antimicrobial layer 2 can also be formed from regular non-woven fabric. Non-woven fabric has features such as moisture-proof, breathable, soft, lightweight, non-flammable, soluble, non-toxic, colorful, cheaper and recyclable.

Further, the antimicrobial layer 2 can be formed from hydrophilic spunbond non-woven fabric or regular non-woven fabric that is processed with the antimicrobial agent. Dip hydrophilic spunbond non-woven fabric or regular non-woven fabric with antimicrobial agent for 1 to 5 hours, then oven dry the immersed hydrophilic spunbond non-woven fabric or regular non-woven fabric at 100°C and go through the disinfection process, thus receiving antimicrobial layer 2. The antimicrobial agent can be the ASK Antimicrobial Fabric Agent commercially available from Sanhe Anbatec Bio-Technology Co., Ltd.. The grammage of the antimicrobial layer 2 is 20-33g/m², with optimum at 25g/m². The grammage of the filter layer 3 is 20-33g/m², with an optimum at 25g/m².

In the antimicrobial face mask based upon antimicrobial mechanism of molybdenum oxide and/or tungsten oxide, the antimicrobial layer 2 is set outside filter layer 3. Setting antimicrobial layer 2 outside filter layer 3 puts the antimicrobial process ahead of filteration, whereas setting antimicrobial layer 2 inside filter layer 3 weakens antimicrobial performance, since in real-life scenarios, most bacteria are carried by dust particles, therefore if dust is filtered through filter layer 3 before antimicrobial layer 2, bacteria will stuck in filter layer 3 with dust particles, and thus the antimicrobial effect of antimicrobial layer 2 will be affected.

### Embodiment 1

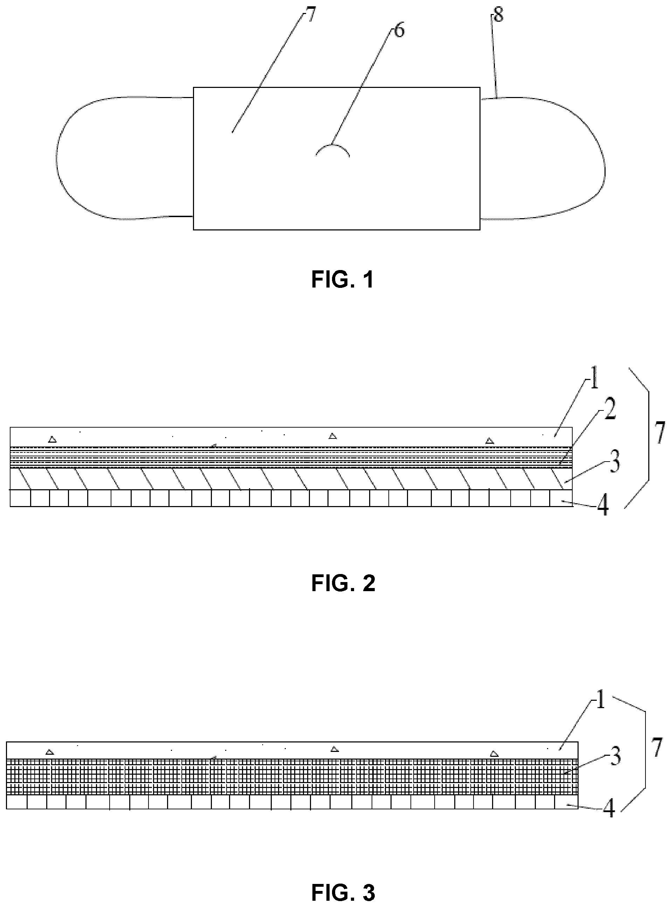

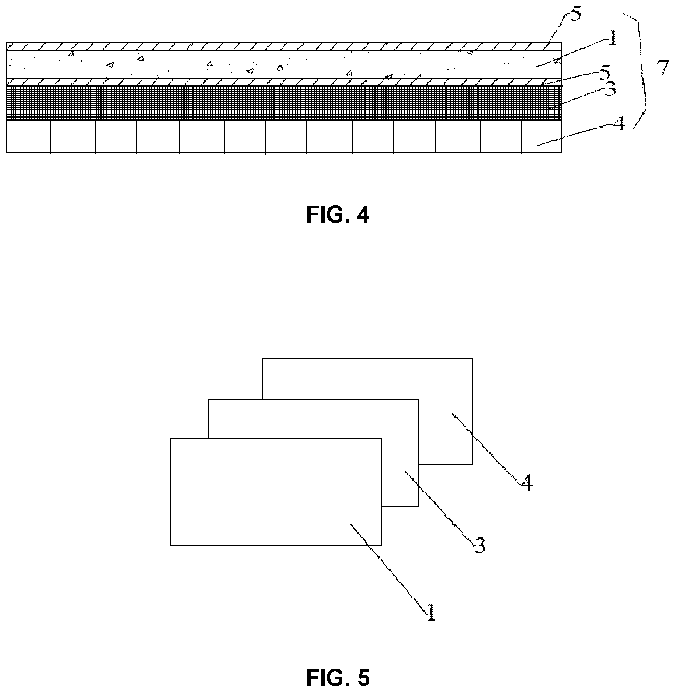

As presented in FIG.1 and FIG.5, the invention provides an antimicrobial face mask based upon antimicrobial mechanism of molybdenum oxide and/or tungsten oxide, comprising: face mask body 7, including outer layer 1, filter layer 3 and skin-contact layer 4 laminated subsequently from the outside to the inside. Outer layer 1, filter layer 3 and skin-contact layer 4 are ultrasonically welded together on four sides, forming face mask body 7, wherein outer layer 1 is the antimicrobial layer 2. The antimicrobial layer 2 will be processes by dipping the spunbond non-woven fabric with the antimicrobial agent for 30 minutes, then oven dry the spunbond non-woven fabric at 70°C, and go through the disinfection process, thus receiving outer layer 1 with antimicrobial function. The antimicrobial agent can be the ASK Antimicrobial Fabric Agent commercially available from Sanhe Anbatec Bio-Technology Co., Ltd.. The grammage of the outer layer 1 is 28g/m².

The skin-contact layer 4 is formed from hydrophilic spunbond non-woven fabric. The grammage of the skin-contact layer 4 is 25g/m².

The filter layer 3 is formed from meltbown non-woven fabric. The grammage of the filter layer 3 is 25g/m².

As presented in FIG.1, adjustable nose clip 6 is set on face mask body 7. Adjusting nose clip 6 ensures antimicrobial face mask based upon antimicrobial mechanism of molybdenum oxide and/or tungsten oxide fit closely to user's face. Elastic ear loops 8 are set on both ends of face mask body 7. Putting on face mask through pulling ear loops back and around both ears. Ear loops 8 are elastic, therefore ensures face mask being suitable for different face types.

Outer layer 1, filter layer 3 and skin-contact layer 4 share the same dimensions.

The antimicrobial face mask based upon antimicrobial mechanism of molybdenum oxide and/or tungsten oxide described in this embodiment has effective filtration efficiency over 95% and 30-minute antimicrobial rate over 99%.

### Embodiment 2

As presented in FIG.4, the invention provides an antimicrobial face mask based upon antimicrobial mechanism of molybdenum oxide and/or tungsten oxide, comprising: face mask body 7, including outer layer 1 that has antimicrobial surfaces 5, filter layer 3 and a skin-contact layer 4 laminated subsequently from the outside to the inside. The outer layer 1 has antimicrobial surfaces 5 on both two sides; the antimicrobial surface 5 on the inside contacts the filter layer 3; the antimicrobial surface 5 on the outside contacts the outer environment and can eliminate airborne bacteria that go through the face mask. The antimicrobial surface 5 contains molybdenum oxide and/or tungsten oxide, both of which have antimicrobial property. There forms a three dimensional weak acid micro-environment once molybdenum oxide and/or tungsten oxide particles in antimicrobial surfaces 5 come into contact with water particles in the air, and create a layer of hydrogen ion through ionization reaction. The weak acid microenvironment in outer layer 1 can effectively eliminate bacteria that contact the outer layer 1 and that go through the layer 1. Then filter layer 3 filters sterilized dust particles that pass through outer layer 1.

The outer layer 1 is formed from spunbond non-woven fabric. The grammage of the outer layer 1 is 28g/m².

Outer layer 1 with antimicrobial surfaces 5 is processed through dipping both sides of the spunbond non-woven fabric successively into the antimicrobial agent for 20 minutes, then oven dry the immersed spunbond non-woven fabric at 70°C and go through the disinfection process, thus receiving outer layer 1 with antimicrobial surfaces 5. The antimicrobial agent can be the ASK Antimicrobial Fabric Agent commercially available from Sanhe Anbatec Bio-Technology Co., Ltd. Outer layer 1, filter layer 3 and skin-contact layer 4 share the same dimensions.

The antimicrobial face mask based upon antimicrobial mechanism of molybdenum oxide described in this embodiment has effective filtration efficiency over 95% and 60-minute antimicrobial rate over 95%.

### Embodiment 3

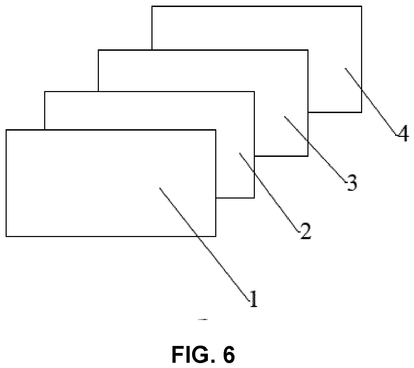

As presented in FIG.2 and FIG.6, the invention provides an antimicrobial face mask based upon antimicrobial mechanism of molybdenum oxide and/or tungsten oxide, comprising: face mask body 7 including the outer layer 1, antimicrobial layer 2, filter layer 3 and skin-contact layer 4 laminated subsequently from the outside to the inside. The antimicrobial layer 2 on the outside contacts outer layer 1, whereas antimicrobial layer 2 on the inside contacts filter layer 3. The outer layer 1 is formed from spunlace non-woven fabric. The grammage of the outer layer 1 is 25g/m².

Skin-contact layer 4 is formed from extra soft spunbond non-woven fabric. The grammage of the skin-contact layer 4 is 25g/m². Antimicrobial layer 2 is formed from hydrophilic spunbond non-woven fabric.

Antimicrobial layer 2 is formed from hydrophilic spunbond non-woven fabric that is processed with the antimicrobial agent. Dip the hydrophilic spunbond non-woven fabric with antimicrobial agent for 1 hour, then oven dry the immersed hydrophilic spunbond non-woven fabric at 80°C and go through the disinfection process, thus receiving antimicrobial layer 2. The antimicrobial agent can be the ASK Antimicrobial Fabric Agent commercially available from Sanhe Anbatec Bio-Technology Co., Ltd. The grammage of the antimicrobial layer 2 is 25g/m². The grammage of the filter layer 3 is 25g/m². The antimicrobial face mask based upon antimicrobial mechanism of molybdenum oxide and/or tungsten oxide described in this embodiment has effective filtration efficiency over 95% and 20-minute antimicrobial rate over 99% (see Table 1).

**Table 1**

| **GUANG ZHOU INSTITUTE OF MICROBIOLOGY TEST REPORT** | | | | | | | | | |
|---|---|---|---|---|---|---|---|---|---|
| | | | | | | Date Received: Dec. 02, 2019 | | | |
| | | | | | | Date Analyzed: Dec. 04, 2019 | | | |
| **Test Results** | | | | | | | | | |
| Sample Number | Test time | Test Bacteria | Control Sample Bacteria Count After 0h Treatment (CFU) | Control Sample Bacteria Count After 18h Treatment (CFU) | Control Sample Bacteria Count A fter 20 min Treatment (CFU) | Test Sample Bacteria Count After 20 min Treatment (CFU) | Bacteria Growth Rate of Control Sample (F) | Antibacterial rate (%) | Antibacterial value |
| Embodiment 3 WJ20193002-1 | 20min | *Staphylococcus aureus* | 2.2×10⁵ | 4.2×10⁷ | 2.6×10⁵ | <20 | 2.3 | >99.99 | >4.1 |
| | | *Klebsiella pneumoniae* | 3.8×10⁵ | 4.6×10⁸ | 3.9×10⁵ | <20 | 3.1 | >99.99 | >4.3 |
| | | *Candida albicans* | 3.6×10⁵ | 1.8×10⁷ | 3.6×10⁵ | <20 | 1.7 | >99.99 | >4.3 |

| | | | | | | | | | |
|---|---|---|---|---|---|---|---|---|---|
| **Note:** According to the applied standard QAB J07.01-2019, the test result shall be valid only when the bacteria growth rate of control group is greater than or equals to 1.5; When the antibacterial value ≥1 or the antibacterial rate ≥ 90%, the samples have some antimicrobial effect; When the antibacterial value ≥2 or the antibacterial rate ≥ 99%, the samples have moderately strong antimicrobial effect; When the antibacterial value ≥3 or the antibacterial rate ≥ 99.9%, the samples have strong antimicrobial effect; When the antibacterial value ≥4 or the antibacterial rate ≥ 99.99%, the samples have extremely strong antimicrobial effect. | | | | | | | | | |

Though demonstrations and figures in the above, including numerous specific details are set forth in order to provide a thorough understanding of the invention, the invention is not limited to the above embodiments and fields of application. The embodiments should only be considered exemplary, instructive, but not restrictive. Hence, a person with ordinary skill in the art can make various other embodiments and modifications in light of the specification, provided that they do not conflict with the scope of protection of the invention. Those embodiments and modifications are all in the scope of protection of the invention.

## Claims

1. An antimicrobial face mask based upon the antimicrobial mechanism of molybdenum oxide and/or tungsten oxide, comprising:
a face mask body (7) including an outer layer (1), a filter layer (3) and a skin-contact layer (4) laminated subsequently from the outside to the inside, wherein the outside is the side that is exposed to outer environment and the inside is the side that contacts facial skin.

2. The mask of claim 1, wherein the outer layer (1) has antimicrobial surfaces (5) on both two sides; the antimicrobial surface (5) on the inside contacts the filter layer (3).

3. The mask of claim 1, wherein the outer layer (1) comprises an antimicrobial layer (2).

4. The mask of claim 2, wherein the antimicrobial surface (5) is dipped with molybdenum oxide and/or tungsten oxide.

5. The mask of claim 3, wherein the outer layer (1) is dipped with molybdenum oxide and/or tungsten oxide.

6. The mask of claim 1, wherein the antimicrobial layer (2) is situated between the outer layer (1) and the filter layer (3), namely the layers from outside to inside are, in turn, outer layer (1), antimicrobial layer (2), filter layer (3) and skin-contact layer (4).

7. The mask of claim 6, wherein the antimicrobial layer (2) is formed from hydrophilic spunbond non-woven fabric, wherein the antimicrobial layer (2) is dipped with molybdenum oxide and/or tungsten oxide.

8. The mask of any one of claims 1-6, wherein the filter layer (3) is formed from meltblown non-woven fabric.

9. The mask of any one of claims 1-6, wherein the outer layer (1) is formed from spunbond or spunlace non-woven fabric.

10. The mask of any one of claims 1-6, wherein the skin-contact layer (4) is formed from spunbond non-woven fabric, hydrophilic spunbond non-woven fabric, spunlace non-woven fabric or extra soft spunbond non-woven fabric.

11. The mask of any one of claims 1-6, wherein an adjustable nose clip (6) is set on the face mask body (7).
